# EUROPÄISCHE PATENTSCHRIFT

(11) **EP 1 136 303 B1**
(45) Veröffentlichungstag und Bekanntmachung des Hinweises auf die Patenterteilung: **17.08.2005**
(21) Anmeldenummer: 01105391.5
(22) Anmeldetag: 12.03.2001
(51) Int. Cl.: B60K 31/04

(54) **Verfahren zur automatischen Geschwindigkeitsbegrenzung eines Kraftfahrzeuges**
Method for the automatic limitation of vehicle speed
Méthode pour la limitation automatique de la vitesse d'un véhicule

(30) Priorität: 20.03.2000 DE 10013657
(43) Veröffentlichungstag der Anmeldung: 26.09.2001
(73) Patentinhaber: Volkswagen Aktiengesellschaft, 38436 Wolfsburg (DE)
(72) Erfinder: Kiesewetter, Thomas, 38118 Braunschweig (DE); Ruchatz, Thomas, 38165 Lehre (DE); Boog, Torsten, 38322 Hedeper (DE)

(56) Entgegenhaltungen:
- DE-A- 4 434 022
- DE-A- 19 509 494

## Beschreibung

Die Erfindung betrifft ein Verfahren zur automatischen Geschwindigkeitsbegrenzung eines Kraftfahrzeuges, bei dem mit Hilfe eines Bedienelementes ein Geschwindigkeitsgrenzwert (V_{g}) von einem Benutzer eingegeben wird, mit dem ein Bereich einzuhaltender Geschwindigkeiten von einem Bereich zu vermeidender Geschwindigkeiten getrennt wird, bei dem die Geschwindigkeitsbegrenzung vom Benutzer eingeschaltet wird, bei dem die gefahrene Geschwindigkeit (v) des Kraftfahrzeuges gemessen wird, und bei dem die Geschwindigkeit (v) des Kraftfahrzeuges durch einen Eingriff in das Antriebsmanagement begrenzt wird, wenn die Geschwindigkeit (v) im Bereich zu vermeidender Geschwindigkeiten liegt.

Ein derartiges Verfahren ist aus dem Stand der Technik der DE 44 34 022 C2 bekannt.

Ein Problem bei Geschwindigkeitsbegrenzungen besteht darin, daß dann, wenn der eingegebene Geschwindigkeitsgrenzwert im Zeitpunkt der Aktivierung der Geschwindigkeitsbegrenzung deutlich geringer als die momentan gefahrene Geschwindigkeit des Kraftfahrzeuges ist. Würde die Geschwindigkeitsbegrenzung direkt greifen, so würde das Fahrzeug unkontrolliert abgebremst. Eine derartige Begrenzungsweise ist nicht nur unkomfortabel für den Fahrer, sondern sie stellt auch eine erhebliche Beeinträchtigung des nachfolgenden Verkehrs dar, da durch ein unkontrolliertes Abbremsen eine überraschende Verkehrssituation für den nachfolgenden Verkehr entstehen kann.

Aus der DE 195 09 494 A1, von der die vorliegende Erfindung ausgeht, ist es bekannt, daß die Geschwindigkeitsbegrenzung nur dann aktiviert werden kann, wenn die aktuell gefahrene Geschwindigkeit des Kraftfahrzeuges um einen geschwindigkeitsabhängig vorgegebenen Wert oberhalb des Geschwindigkeitsgrenzwertes liegt. Damit ist jedoch der Nachteil verbunden, daß dann, wenn ein Benutzer einen deutlich niedrigeren Geschwindigkeitsgrenzwert als die momentan gefahrenen Geschwindigkeit des Kraftfahrzeuges einstellen und die Geschwindigkeitsbegrenzung aktivieren möchte, der Benutzer gezwungen ist, ein zusätzliches Bedienelement zu aktivieren. Das aus der DE 195 09 494 A1 bekannte Verfahren ist somit umständlich in seiner Bedienung.

Der Erfindung liegt daher das technische Problem zugrunde, ein Verfahren zur automatischen Geschwindigkeitsbegrenzung eines Kraftfahrzeuges anzugeben, das auch dann in einfacher Weise aktiviert werden kann, wenn der eingegebene Geschwindigkeitsgrenzwert deutlich geringer als die momentan gefahrene Geschwindigkeit des Kraftfahrzeuges ist.

Das zuvor aufgezeigte technische Problem wird erfindungsgemäß durch ein Verfahren mit den Merkmalen des Anspruches 1 dadurch gelöst, daß die Geschwindigkeitsbegrenzung nach dem ersten Einschalten erst dann aktiv wird, wenn die gefahrene Geschwindigkeit (v) kleiner als ein vom Geschwindigkeitsgrenzwert (v_{g}) abhängiger Aktivierungsgeschwindigkeitswert (Vₐ) ist.

Somit wird automatisch überwacht, ob sich die Fahrgeschwindigkeit des Kraftfahrzeuges innerhalb eines Bereiches oberhalb des Geschwindigkeitsgrenzwertes befindet, in dem auch ein Abbremsen des Kraftfahrzeuges nicht zu einem unkontrollierten Fahrverhalten des Kraftfahrzeuges führt. Durch das automatische Überwachen des Kriteriums zum Aktivieren der automatischen Geschwindigkeitsbegrenzung braucht der Benutzer des Kraftfahrzeuges nur einmal den Geschwindigkeitsgrenzwert einzustellen und damit die automatische Geschwindigkeitsbegrenzung einschalten. Diese wird aber erst dann aktiv, wenn durch das aktive Fahrverhalten des Benutzers des Kraftfahrzeuges dieses in den Bereich unterhalb den Aktivierungsgeschwindigkeitswert abgebremst wird. Dieses Abbremsen erfolgt in aller Regel kontrolliert und an dem Verkehrsfluß angepaßt, so daß insbesondere für den nachfolgenden Verkehr keine unkontrollierte Situation entstehen kann.

In einer ersten Ausgestaltung entspricht der Aktivierungsgeschwindigkeitswert dem Geschwindigkeitsgrenzwert, so daß erst unterhalb des Geschwindigkeitsgrenzwertes die Geschwindigkeitsbegrenzung aktiviert wird.

In bevorzugter Weise ist der Aktivierungsgeschwindigkeitswert, ab dem die Geschwindigkeitsbegrenzung aktiv wird, um einen vorgegebenen Faktor größer als der eingestellte Geschwindigkeitsgrenzwert. Dieser Faktor beträgt bspw. 1,05 und insbesondere 1,10.

Das bedeutet, daß erst dann, wenn sich die Fahrgeschwindigkeit innerhalb eines prozentual vorgegebenen Intervalls oberhalb des Geschwindigkeitsgrenzwertes befindet, die Geschwindigkeitsbegrenzung aktiv wird. Darüber hinaus kann der Faktor eine monoton fallende Funktion von der Fahrgeschwindigkeit darstellen. Dieses wird dem Umstand gerecht, daß bei hohen Geschwindigkeiten größere Bremsleistungen erforderlich sind, um ein Abbremsen um ein vorgegebenes Geschwindigkeitsintervall zu realisieren. Da ein unkontrolliert starkes Abbremsen gerade bei großen Geschwindigkeiten zu Gefahrensituationen führen kann, sollte daher der Faktor für größere Geschwindigkeiten geringer als für kleinere Geschwindigkeiten sein.

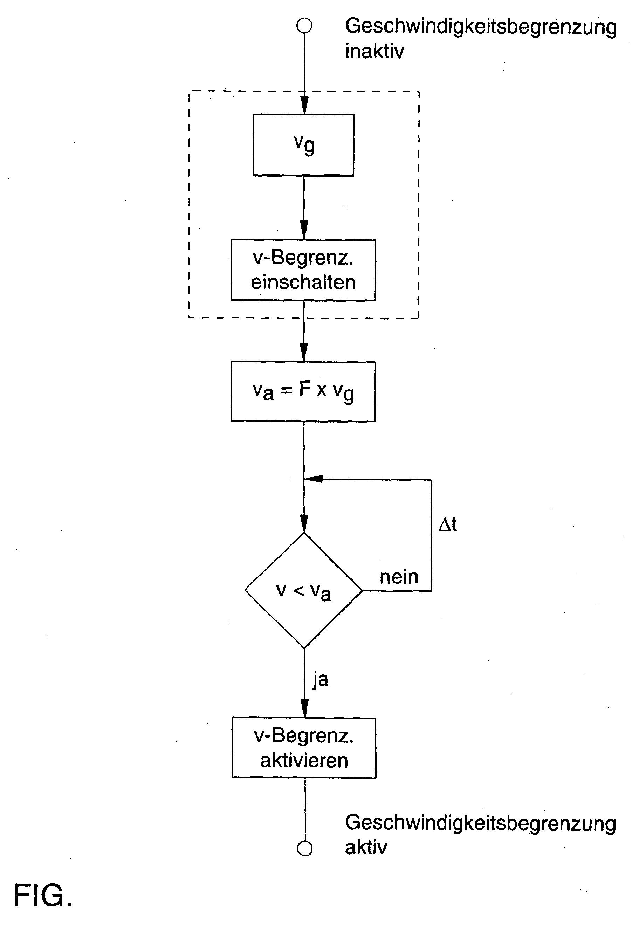

Die Erfindung wird im folgenden anhand eines Flußdiagramms näher erläutert, wozu auf die einzige Figur der Zeichnung verwiesen wird.

Zu Beginn des in der Figur dargestellten Verfahrens ist die Geschwindigkeitsbegrenzung inaktiv, siehe in der Figur oben. Zunächst wird der Geschwindigkeitsgrenzwert v_{g} eingegeben, wozu ein Benutzer ein oder mehrere Bedienelemente betätigt. Anschließend wird die Geschwindigkeitsbegrenzung mit dem nunmehr vorgegebenen Geschwindigkeitsgrenzwert v_{g} eingeschaltet. Die beiden Schritte können auch gleichzeitig erfolgen, was mit dem gestrichelten Viereck in der Figur dargestellt ist. In einem solchen Fall wird jeweils eine eingegebene Geschwindigkeitsgrenzwert v_{g} als Einschalten der Geschwindigkeitsbegrenzung interpretiert.

Anschließend wird der Aktivierungsgeschwindigkeitswert vₐ als Produkt aus dem Faktor F und dem Geschwindigkeitsgrenzwert v_{g} berechnet. Ist der Faktor F=1, so entspricht der Aktivierungsgeschwindigkeitswert vₐ dem Geschwindigkeitsgrenzwert v_{g}. Ist dagegen der Faktor F größer als 1, so ist der Aktivierungsgeschwindigkeitswert vₐ entsprechend größer als der Geschwindigkeitsgrenzwert v_{g}.

Im nächsten Schritt wird überprüft, ob die gefahrene Geschwindigkeit v des Kraftfahrzeuges kleiner als der berechnete Aktivierungsgeschwindigkeitswert vₐ ist. Ist dies nicht der Fall, so wird eine Schleife gebildet, bis die Abfragebedingung v<vₐ erfüllt ist. In der Schleife kann ein Verzögerungsglied enthalten sein, das eine vorgegebene Verzögerungszeit Δt erzeugt, bevor das Entscheidungskriterium erneut durchlaufen wird.

Ist das Entscheidungskriterium erfüllt, so wird anschließend die Geschwindigkeitsbegrenzung aktiviert.

Die zuvor beschriebene Erfindung stellt somit eine komfortable Sicherheitsfunktion für eine Geschwindigkeitsbegrenzung dar. Die Geschwindigkeitsbegrenzung wird Limiter bezeichnet.

## Patentansprüche

1. Verfahren zur automatischen Geschwindigkeitsbegrenzung eines Kraftfahrzeuges,
- bei dem mit Hilfe eines Bedienelementes ein Geschwindigkeitsgrenzwert (v_{g}) von einem Benutzer eingegeben wird, mit dem ein Bereich einzuhaltender Geschwindigkeiten von einem Bereich zu vermeidender Geschwindigkeiten getrennt wird,
- bei dem die Geschwindigkeitsbegrenzung vom Benutzer eingeschaltet wird,
- bei dem die gefahrene Geschwindigkeit (v) des Kraftfahrzeuges gemessen wird, und
- bei dem die Geschwindigkeit (v) des Kraftfahrzeuges durch einen Eingriff in das Antriebsmanagement begrenzt wird, wenn die Geschwindigkeit (v) im Bereich zu vermeidender Geschwindigkeiten liegt,
**dadurch gekennzeichnet,**
- **daß** die Geschwindigkeitsbegrenzung nach dem ersten Einschalten erst dann aktiv wird, wenn die gefahrene Geschwindigkeit (v) kleiner als ein vom Geschwindigkeitsgrenzwert (v_{g}) abhängiger Aktivierungsgeschwindigkeitswert (vₐ) ist.

2. Verfahren nach Anspruch 1, **dadurch gekennzeichnet, daß** der Aktivierungsgeschwindigkeitswert (vₐ) gleich dem Geschwindigkeitsgrenzwert (v_{g}) ist.

3. Verfahren nach Anspruch 1, **dadurch gekennzeichnet, daß** der Aktivierungsgeschwindigkeitswert (vₐ) um einen vorgegebenen Faktor größer als der eingestellte Geschwindigkeitsgrenzwert (v_{g}) ist.

4. Verfahren nach Anspruch 3, **dadurch gekennzeichnet, daß** der Faktor größer als 1,05, insbesondere größer als 1,10 ist.

5. Verfahren nach Anspruch 3, **dadurch gekennzeichnet, daß** der Faktor geschwindigkeitsabhängig ist.

6. Verfahren nach Anspruch 5, **dadurch gekennzeichnet, daß** der Faktor eine monoton fallende Funktion von der Geschwindigkeit (v) darstellt.

## Claims

1. Method for the automatic speed limiting of a motor vehicle,
- in which a speed limiting value (v_{g}) is input by an operator with the aid of an operating element, with which limiting value (v_{g}) a range of speeds to be adhered to is separated from a range of speeds to be avoided,
- in which the speed limiter is switched on by the operator,
- in which the travelled speed (v) of the motor vehicle is measured, and
- in which the speed (v) of the motor vehicle is limited by an intervention in the drive management system if the speed (v) lies in the range of speeds to be avoided,
**characterized**
- **in that** the speed limiter becomes active after initial switching-on only if the travelled speed (v) is lower than an activation speed value (vₐ) which is dependent on the speed limiting value (v_{g}).

2. Method according to Claim 1, **characterized in that** the activation speed value (vₐ) is equal to the speed limiting value (v_{g}).

3. Method according to Claim 1, **characterized in that** the activation speed value (vₐ) is greater by a predefined factor than the set speed limiting value (v_{g}).

4. Method according to Claim 3, **characterized in that** the factor is greater than 1.05, in particular is greater than 1.10.

5. Method according to Claim 3, **characterized in that** the factor is dependent on the speed.

6. Method according to Claim 5, **characterized in that** the factor represents a monotonously falling function of the speed (v).

## Revendications

1. Procédé pour la limitation automatique de la vitesse d'un véhicule automobile,
- dans lequel une valeur limite de vitesse (v_{g}) est entrée par un utilisateur à l'aide d'un élément de commande, avec laquelle une plage de vitesses à respecter est séparée d'une plage de vitesses à éviter,
- dans lequel la limitation de vitesse est enclenchée par l'utilisateur,
- dans lequel la vitesse de conduite (v) du véhicule automobile est mesurée, et
- dans lequel la vitesse (v) du véhicule automobile est limitée par intervention dans la gestion d'entraînement lorsque la vitesse (v) est située dans la plage de vitesses à éviter,
**caractérisé en ce que**
- la limitation de vitesse après le premier enclenchement est seulement activée si la vitesse de conduite (v) est inférieure à une valeur de vitesse d'activation (vₐ) dépendant de la valeur limite de vitesse (v_{g}).

2. Procédé selon la revendication 1, **caractérisé en ce que** la valeur de vitesse d'activation (vₐ) est égale à la valeur limite de vitesse (v_{g}).

3. Procédé selon la revendication 1, **caractérisé en ce que** la valeur de vitesse d'activation (vₐ) est supérieure d'un facteur prédéfini à la valeur limite de vitesse (v_{g}) ajustée.

4. Procédé selon la revendication 3, **caractérisé en ce que** le facteur est supérieur à 1,05, en particulier supérieur à 1,10.

5. Procédé selon la revendication 3, **caractérisé en ce que** le facteur dépend de la vitesse.

6. Procédé selon la revendication 5, **caractérisé en ce que** le facteur constitue une fonction de la vitesse (v) décroissante de manière monotone.
